# EUROPÄISCHE PATENTSCHRIFT

(11) **EP 4 065 862 B1**
(45) Veröffentlichungstag und Bekanntmachung des Hinweises auf die Patenterteilung: **14.05.2025**
(21) Anmeldenummer: 20812253.1
(22) Anmeldetag: 24.11.2020
(51) Int. Cl.: F16H 57/02

(54) **GETRIEBEEINRICHTUNG FÜR EIN ELEKTRISCH ANTREIBBARES FAHRZEUG, ANTRIEBSEINRICHTUNG FÜR EIN ELEKTRISCH ANTREIBBARES FAHRZEUG UND FAHRZEUG**
TRANSMISSION DEVICE FOR AN ELECTRICALLY DRIVEABLE VEHICLE, DRIVE DEVICE FOR AN ELECTRICALLY DRIVEABLE VEHICLE, AND VEHICLE
DISPOSITIF DE TRANSMISSION POUR UN VÉHICULE POUVANT ÊTRE ENTRAÎNÉ ÉLECTRIQUEMENT, DISPOSITIF D'ENTRAÎNEMENT POUR UN VÉHICULE POUVANT ÊTRE ENTRAÎNÉ ÉLECTRIQUEMENT ET VÉHICULE

(30) Priorität: 29.11.2019 DE 102019132496
(43) Veröffentlichungstag der Anmeldung: 05.10.2022
(73) Patentinhaber: Valeo eAutomotive Germany GmbH, 91056 Erlangen (DE)
(72) Erfinder: FÜRSTENHÖFER, Christian Gerhard, 90768 Fürth (DE); HAAS, Bernd, 90402 Nürnberg (DE)
(74) Vertreter: Valeo Powertrain Systems
(86) Internationale Anmeldenummer: PCT/EP2020/083124
(87) Internationale Veröffentlichungsnummer: WO 2021/105081

(56) Entgegenhaltungen:
- EP-A1- 3 670 973
- EP-A2- 1 256 747
- WO-A1-2017/057070
- DE-A1- 102015 217 875
- DE-A1- 102017 124 499

## Beschreibung

Getriebeeinrichtung für ein elektrisch antreibbares Fahrzeug, Antriebseinrichtung für ein elektrisch antreibbares Fahrzeug und Fahrzeug

Die vorliegende Erfindung betrifft eine Getriebeeinrichtung für ein elektrisch antreibbares Fahrzeug, eine Antriebseinrichtung für ein elektrisch antreibbares Fahrzeug und ein Fahrzeug.

Das Dokument DE 10 2015 217 875 A1 offenbart ein Antriebssystem mit einer elektrischen Maschine und einem Getriebe für ein Kraftfahrzeug. Das Getriebe weist eine Getriebeabtriebswelle und ein Getriebegehäuse sowie eine Parksperre auf.

Das Dokument DE 10 2017 124499 A1 zeigt eine Getriebeeinrichtung mit einem Getriebeelement und einer Parksperre, die in einem Getriebegehäuse angeordnet sind.

Das nachveröffentlichte Dokument EP 3 670 973 A1 zeigt eine Getriebeeinrichtung mit einem Getriebeelement, einer Parksperre, einer Anschlussvorrichtung und einer Druckausgleichsvorrichtung sowie ein Getriebegehäuse.

Durch die Integration einer Parksperre in ein Getriebegehäuse kann Bauraum eingespart werden, der insbesondere im Hinblick auf den Einsatz der Getriebeeinrichtung in einer elektrischen Antriebseinrichtung eines Fahrzeugs knapp ist. Allerdings ergeben sich daraus besondere Herausforderungen wegen des Vorhandenseins von Schmiermitteln und höheren Temperaturen im Inneren des Getriebegehäuses. Insbesondere ein Parksperrenaktuator der Parksperre kann empfindlich bis hin zu einem Funktionsausfall auf das Schmiermittel reagieren.

Der Erfindung liegt die Aufgabe zugrunde, eine aufwandsarm realisierbare und robust betreibbare Möglichkeit zur Anordnung einer Parksperre in einem Getriebegehäuse anzugeben.

Diese Aufgabe wird erfindungsgemäß gelöst durch eine Getriebeeinrichtung für ein elektrisch antreibbares Fahrzeug nach Anspruch 1.

Die Erfindung beruht auf der Erkenntnis, dass Funktionsausfälle des Parksperrenaktuators häufig auf das Eindringen von Schmiermitteln in den Parksperrenaktuator zurückzuführen ist. Dieses Eindringen beruht auf einem Druckunterschied zwischen dem Inneren des Parksperrenaktuators und seiner Umgebung. Durch die bei der erfindungsgemäßen Getriebeeinrichtung vorgesehene Druckausgleichsvorrichtung wird ein Druckausgleich zwischen dem Inneren des Parksperrenaktuators und dem Äußeren des Getriebegehäuses realisiert und dadurch ein Eindringen des Schmiermittels verhindert. Dies ermöglicht vorteilhafterweise einen robusteren Betrieb der Getriebeeinrichtung. Dadurch, dass das Durchführungselement direkt in die Getriebegehäuseöffnung eingesetzt ist, kann die Druckausgleichsvorrichtung besonders aufwandsarm realisiert werden.

Das Fluidleitelement ist bevorzugt als Rohr oder als Schlauch ausgebildet. In vorteilhafter Ausgestaltung ist das Fluidleitelement aus einem Kunststoff, beispielsweise PTFE oder PPA, gebildet.

Gemäß der vorliegenden Erfindung weist die Druckausgleichsvorrichtung am ersten Ende des Fluidleitelements eine Kupplung auf, welche rastend mit einer gegengleichen Kupplung des Parksperrenaktuators, die vorzugsweise an einem Parksperrenaktuatorgehäuse ausgebildet ist, verbunden ist. Alternativ oder zusätzlich ist gemäß der vorliegenden Erfindung vorgesehen, dass die Druckausgleichsvorrichtung am zweiten Ende des Fluidleitelements eine Kupplung aufweist, welche rastend mit einer gegengleichen Kupplung des Durchführungselements verbunden ist. So lässt sich das Fluidleitelement aufwandsarm und lösbar am Parksperrenaktuator bzw. am Durchführungselement anordnen und ist zudem leicht wartbar, da im Falle eines Defekts des Fluidleitelements bzw. der fluidleitelementseitigen Kupplung ein einfacher Austausch erfolgen kann.

Dabei kann mit Vorteil vorgesehen sein, dass die Kupplung am ersten Ende des Fluidleitelements als Becherkupplung ausgebildet ist und/oder die Kupplung am zweiten Ende des Fluidleitelements als Becherkupplung ausgebildet ist.

Zweckmäßig ist es ferner, wenn die Kupplung des Parksperrenaktuators und/oder die Kupplung des Durchführungselements einen Rastkragen aufweist oder aufweisen.

In vorteilhafter Ausgestaltung der erfindungsgemäßen Getriebeeinrichtung kann ferner vorgesehen sein, dass das Durchführungselement außerhalb des Getriebegehäuses eine Membran aufweist.

Um ein unerwünschtes Eindringen von Schmutz und dergleichen in die Druckausgleichsvorrichtung zu verhindern, kann bei der erfindungsgemäßen Getriebeeinrichtung vorgesehen sein, dass das Durchführungselement an seinem freien Ende außerhalb des Getriebegehäuses eine gasdurchlässige Schutzkappe aufweist.

Es wird bei der erfindungsgemäßen Getriebeeinrichtung außerdem bevorzugt, wenn das Durchführungselement wenigstens ein Dichtmittel aufweist, welches das Durchführungselement gegenüber der Getriebegehäuseöffnung abdichtet. So kann zusätzlich ein Heraustreten des Schmiermittels durch die Durchgangsöffnung verhindert werden. Dabei kann gemäß einer Weiterbildung vorgesehen sein, dass das wenigstens eine Dichtmittel einen oder mehrere Dichtringe umfasst. Der oder ein jeweiliger Dichtring kann das Durchführungselement in Umfangsrichtung umgeben.

Eine besonders aufwandsarme Anordnung des Durchführungselements wird realisiert, wenn das Durchführungselement mittels eines Presssitzes in der Getriebegehäuseöffnung befestigt ist. Alternativ kann das Durchführungselement in die Getriebegehäuseöffnung eingeschraubt sein. Nach noch einer weiteren Alternative kann vorgesehen sein, dass das Durchführungselement durch eine gemeinsame Getriebegehäuseöffnung mit einem Steckverbinder durchgeführt ist. Dabei kann das Durchführungselement beispielsweise ein Steckverbindergehäuse, insbesondere einen Flanschabschnitt des Steckverbindergehäuses durchsetzen.

Die der Erfindung zugrunde liegende Aufgabe wird ferner gelöst durch eine Antriebseinrichtung für ein elektrisch antreibbares Fahrzeug, umfassend eine elektrische Maschine, eine erfindungsgemäße Getriebeeinrichtung und eine eine Drehbewegung der elektrischen Maschine auf die Getriebeeinrichtung übertragende Welle.

Dabei kann vorgesehen sein, dass das Getriebegehäuse Teil eines die elektrische Maschine, die Getriebeeinrichtung und die Welle einhausenden Gehäuses ist. Die der Erfindung zugrunde liegende Aufgabe wird schließlich auch gelöst durch ein Fahrzeug, umfassend eine zum Antreiben des Fahrzeugs eingerichtete erfindungsgemäße Antriebseinrichtung.

Weitere Vorteile und Einzelheiten der vorliegenden Erfindung ergeben sich aus den im Folgenden beschriebenen Ausführungsbeispielen sowie anhand der

Zeichnungen, wobei die vorliegende Erfindung durch die nachfolgenden Ansprüche bestimmt wird.

Diese sind schematische Darstellungen und zeigen:
- Fig. 1: eine Frontalansicht eines Ausführungsbeispiels der erfindungsgemäßen Getriebeeinrichtung in einem geöffneten Zustand;
- Fig. 2: eine perspektivische Ansicht des Parksperrenaktuators und der Druckausgleichsvorrichtung;
- Fig. 3: eine geschnittene Ansicht des Durchführungselements;
- Fig. 4: eine perspektivische Ansicht des Durchführungselements; und
- Fig. 5: eine Prinzipskizze eines Ausführungsbeispiels des erfindungsgemäßen Fahrzeugs mit einem Ausführungsbeispiel der erfindungsgemäßen Antriebseinrichtung.

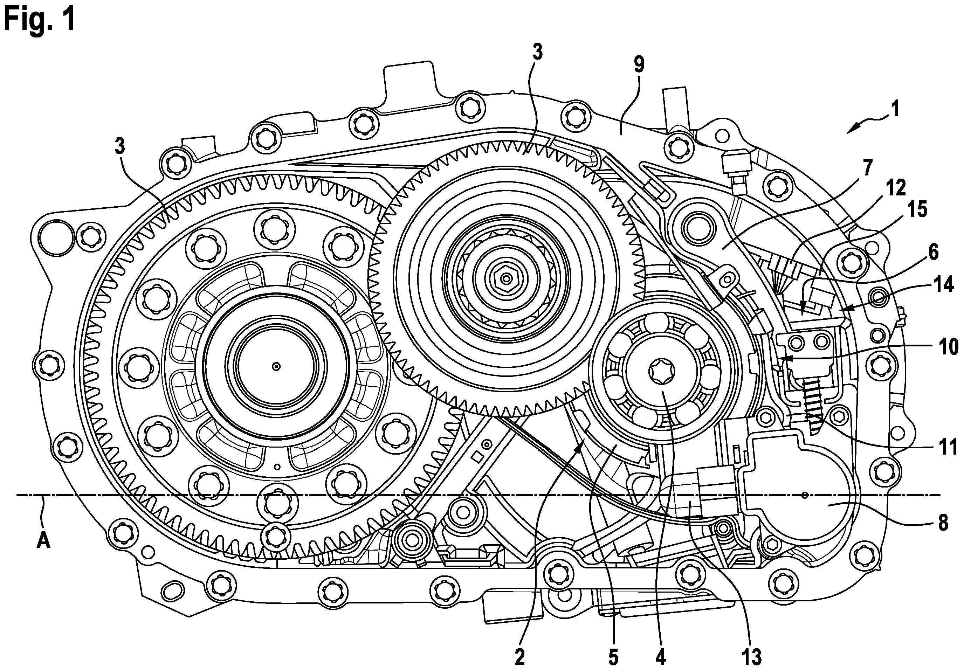

Fig. 1 ist eine Frontalansicht eines Ausführungsbeispiels einer Getriebeeinrichtung 1 in einem geöffneten Zustand.

Die Getriebeeinrichtung 1 umfasst ein Getriebeelement 2, das mit weiteren Getriebeelementen 3 gekoppelt ist, um eine von einer drehfest mit dem Getriebeelement 2 verbunden Welle 4 bereitgestellte Drehbewegung zu übersetzen. An dem Getriebeelement 2 ist ferner ein Parksperrenrad 5 einer Parksperre 6 befestigt, durch welche das Getriebeelement 2 blockierbar ist. Dazu weist die Parksperre 6 ferner eine Parksperrenklinke 7 auf, die mittels eines Parksperrenaktuators 8 der Parksperre 6 in Eingriff mit dem Parksperrenrad 5 gebracht werden kann.

Die Getriebeelemente 2, 3 sowie die Parksperre 6 sind durch ein Getriebegehäuse 9 eingehaust. Zur Schmierung der Getriebeelemente 2, 3 weist die Getriebeeinrichtung 1 ein Schmiermittelbad auf, dessen betriebsüblicher Füllstand durch eine gestrichelte Linie A in Fig. 1 dargestellt ist. Ersichtlich befindet sich die Parksperre 6 teilweise im Schmiermittelbad.

Der Vollständigkeit halber zeigt Fig. 1 ferner eine Anschlussvorrichtung 10, die eine innerhalb des Getriebegehäuses 9 verlaufende Kabelanordnung 11, einen ersten Steckverbinder 12 und einen zweiten Steckverbinder 13 umfasst. Die Steckverbinder 12, 13 sind an gegenüberliegenden Enden der Kabelanordnung 11 angebracht, wobei der zweite Steckverbinder 13 mit dem Parksperrenaktuator 8 verbunden ist. Mittels der Anschlussvorrichtung 10 ist der Parksperrenaktuator 8 von außen elektrisch vorsorgbar und ansteuerbar.

Die Getriebeeinrichtung 1 umfasst eine - in Fig. 1 größtenteils durch die Parksperre 6 und die Anschlussvorrichtung 10 verdeckte - Druckausgleichsvorrichtung 14, durch welche ein Inneres des Parksperrenaktuators 8 mit einem Äußeren des Getriebegehäuses 9 gasdurchlässig verbunden ist und die durch eine Getriebegehäuseöffnung 15 hindurchgeführt ist. Diese Getriebegehäuseöffnung 15 und eine weitere Getriebegehäuseöffnung zur Durchführung des ersten Steckverbinders 12 sind separat ausgebildet.

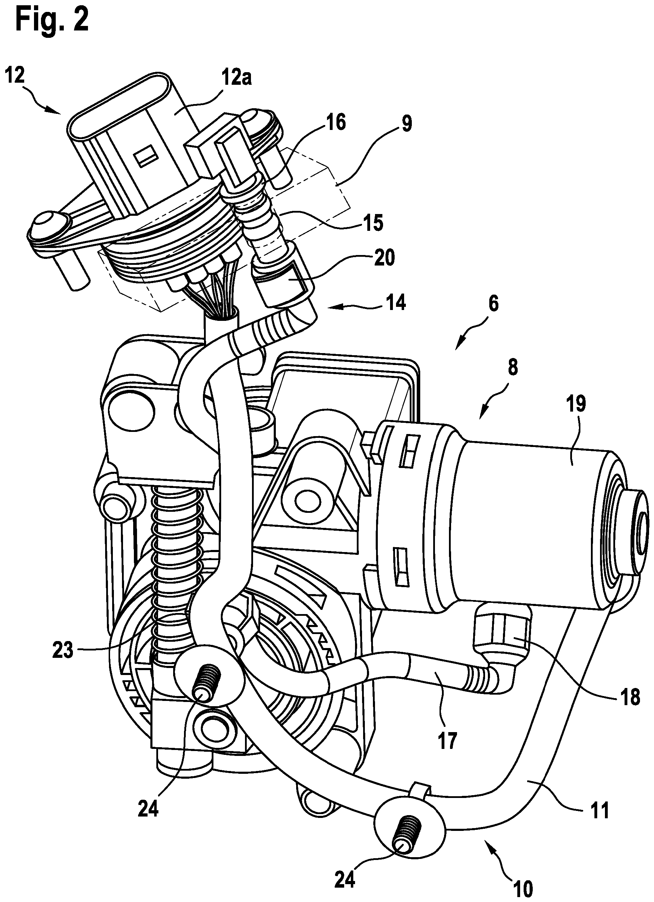

Fig. 2 ist eine perspektivische Ansicht des Parksperrenaktuators 8 und der Druckausgleichsvorrichtung 14. Ferner sind die Anschlussvorrichtung 10 und andeutungsweise gestrichelt das Getriebegehäuse 9 mit der Getriebedurchgangsöffnung 15 für die Druckausgleichsvorrichtung 14 dargestellt.

Die Druckausgleichsvorrichtung 14 umfasst ein Durchführungselement 16, das die Getriebegehäuseöffnung 15 durchsetzt, und ein Fluidleitelement 17, dessen erstes Ende mit dem Inneren des Parksperrenaktuators 8 verbunden ist und dessen zweites Ende mit dem Durchführungselement 16 verbunden ist.

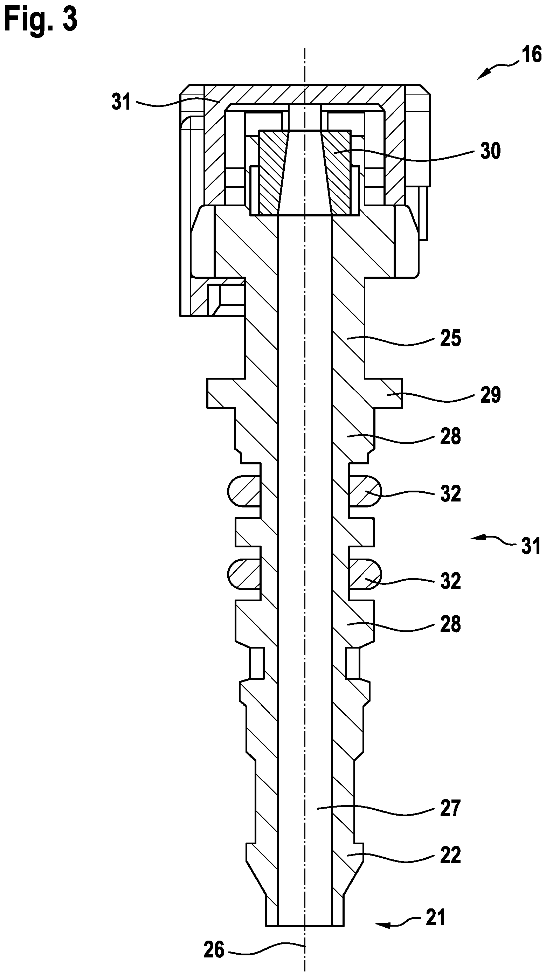

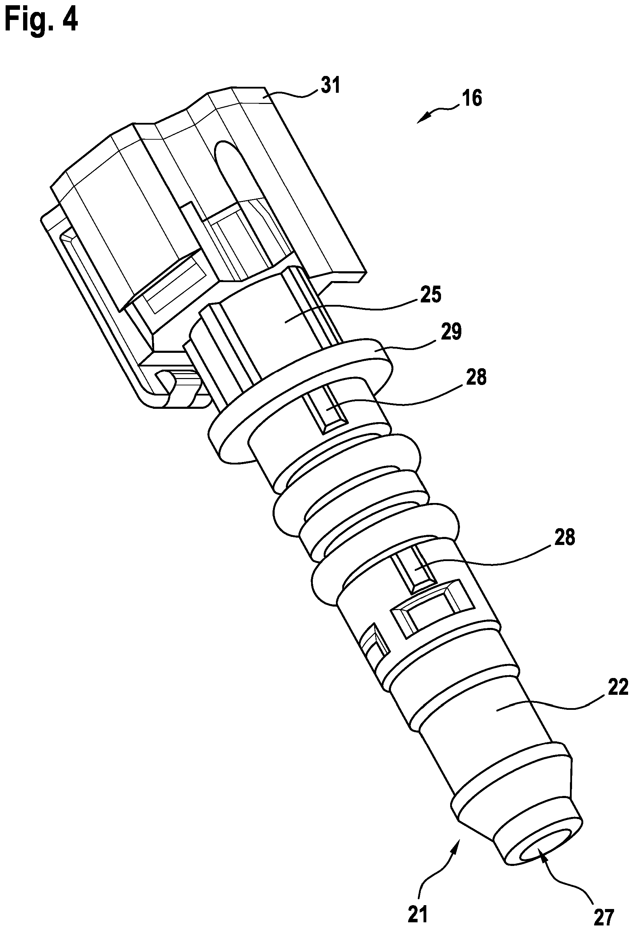

Am ersten Ende des Fluidleitelements 17 weist die Druckausgleichsvorrichtung 14 eine erste Kupplung 18 auf, die rastend mit einer - in Fig. 2 verdeckten - gegengleichen Kupplung, die an einem Parksperrenaktuatorgehäuse 19 ausgebildet ist, verbunden ist. Am zweiten Ende des Fluidleitelements 17 weist die Druckausgleichsvorrichtung 14 eine zweite Kupplung 20 auf, die rastend mit einer - in Fig. 2 verdeckten - gegengleichen Kupplung 21 (siehe Fig. 3 und Fig. 4) des Durchführungselements 16 verbunden ist.

Die Kupplungen 18, 20 der Druckausgleichsvorrichtung 14, die Kupplung 21 und die am Parksperrenaktuatorgehäuse 19 ausgebildete Kupplung sind dazu jeweils als Becherkupplung ausgebildet, wobei die Kupplung 21 und die Kupplung am Parksperrenaktuatorgehäuse 19 jeweils einen Rastkragen 22 (siehe Fig. 3 und Fig.4) aufweisen.

Das Fluidleitelement 17 ist als formstabiles Rohr ausgebildet, dass sich um die Anschlussvorrichtung 10 herumwindet und mittels eines am Fluidleitelement 17 angeordneten Befestigungsmittels 23 an der Kabelanordnung 11 befestigt ist. Zu sehen sind ferner an der Kabelanordnung 11 angebrachte Befestigungsmittel 24 der Anschlussvorrichtung 10, durch welche die Anschlussvorrichtung 10 innerhalb des Getriebegehäuses 9 befestigt ist.

Fig. 3 und Fig. 4 zeigen jeweils das Durchführungselement 16, wobei Fig. 3 eine geschnittene Ansicht ist und Fig. 4 eine perspektivische Ansicht ist.

Das Durchführungselement 16 umfasst einen länglichen Körper 25. Entlang einer Längsachse 26 des Körpers 25 erstreckt sich ein zylindrischer Freiraum 27, der sich zu einem äußeren Ende des Körpers 25 hin verjüngt. Am Körper 25 ist außen der Rastkragen 22, welcher zur Ausbildung der Becherkupplung 21 vorgesehen ist, ausgebildet. Mehrere radial nach außen weisende Vorsprünge 28 des Körpers sind zur Befestigung des Durchführungselements 16 mittels eines Presssitzes in der Getriebegehäuseöffnung 15 vorgesehen. Ein ebenfalls radial nach außen weisender Kragen 29 des Körpers 25 liegt von außen auf dem Getriebegehäuse 9 auf und bildet einen Anschlag für das Einsetzen des Durchführungselements 16.

Daneben umfasst das Durchführungselement 16 außerhalb des Getriebegehäuses 9 eine Membran 30 und an seinem freien Ende bzw. am freien Ende des Körpers 25 eine gasdurchlässige Schutzkappe 31. Ferner ist ein Dichtmittel 31, das zwei koaxial bezüglich der Längsachse 26 am Körper 25 angeordnete Dichtringe 32 umfasst vorgesehen.

Gemäß einem weiteren Ausführungsbeispiel ist das Durchführungselement 16 in die Gehäuseöffnung 15 verschraubt. Gemäß einem weiteren Ausführungsbeispiel sind das Durchführungselement 16 und der erste Steckverbinder 12 und dieselbe Durchgangsöffnung durchgeführt. Dazu kann ein Flanschabschnitt 12a (siehe Fig. 2) des ersten Steckverbinders entsprechend erweitert sein und vom Durchführungselement 16 durchsetzt werden.

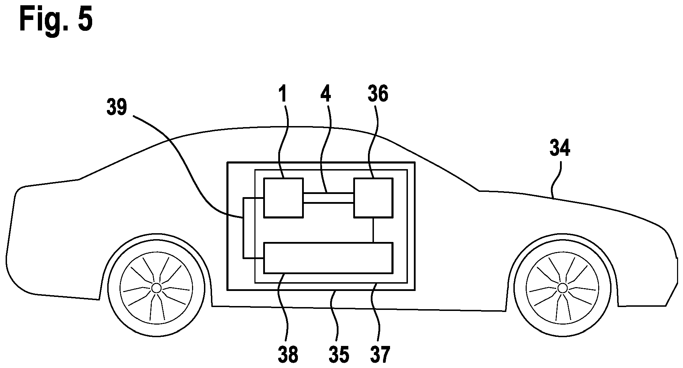

Fig. 5 ist eine Prinzipskizze eines Ausführungsbeispiels eines Fahrzeugs 34 mit einem Ausführungsbeispiel einer Antriebseinrichtung 35.

Die zum Antreiben des Fahrzeugs 34 eingerichtete Antriebseinrichtung 35 umfasst eine elektrische Maschine 36, die Getriebeeinrichtung 1 sowie die Welle 4, welche zur Übertragung einer Drehbewegung der elektrischen Maschine auf die Getriebeeinrichtung 1 eingerichtet ist.

Das Getriebegehäuse 9 ist dabei als Teil eines die elektrische Maschine 36, die Welle 4 und die Getriebeeinrichtung einhausenden Gehäuses 37.

Außerdem weist die Antriebseinrichtung 35 einen Inverter 38 auf, der dazu eingerichtet ist, eine Gleichspannung in eine die elektrischen Maschine 36 versorgende Wechselspannung zu wandeln. Der Inverter 38 ist mittels eines Kabels 39 an den ersten Steckverbinder 12 der Anschlussvorrichtung 10 (siehe Fig. 1) angeschlossen, um die Parksperre 8 elektrisch zu versorgen und anzusteuern.

## Patentansprüche

1. Getriebeeinrichtung (1) für ein elektrisch antreibbares Fahrzeug (34), umfassend
- ein Getriebeelement (2),
- eine Parksperre (6), durch die das Getriebeelement (2) blockierbar ist und die einen Parksperrenaktuator (8) aufweist, und
- ein Getriebegehäuse (9), welches das Getriebeelement (2) und die Parksperre (6) einhaust,
**gekennzeichnet durch**,
- eine Druckausgleichsvorrichtung (14), durch welche ein Inneres des Parksperrenaktuators (8) mit einem Äußeren des Getriebegehäuses (9) gasdurchlässig verbunden ist, wobei die Druckausgleichsvorrichtung (14) ein Durchführungselement (16), das eine Getriebegehäuseöffnung (15) durchsetzt, und ein Fluidleitelement (17), dessen erstes Ende mit dem Inneren des Parksperrenaktuators (8) verbunden ist und dessen zweites Ende mit dem Durchführungselement (16) verbunden ist, aufweist,
wobei die Druckausgleichsvorrichtung (14)
- am ersten Ende des Fluidleitelements (17) eine Kupplung (18) aufweist, welche rastend mit einer gegengleichen Kupplung des Parksperrenaktuators, die vorzugsweise an einem Parksperrenaktuatorgehäuse ausgebildet ist (19), verbunden ist und/oder
- am zweiten Ende des Fluidleitelements (17) eine Kupplung (20) aufweist, welche rastend mit einer gegengleichen Kupplung (21) des Durchführungselements (16) verbunden ist.

2. Getriebeeinrichtung nach Anspruch 1, wobei
die Kupplung (18) am ersten Ende des Fluidleitelements (17) als Becherkupplung ausgebildet ist und/oder die Kupplung (20) am zweiten Ende des Fluidleitelements (17) als Becherkupplung ausgebildet ist.

3. Getriebeeinrichtung nach Anspruch 1 oder 2, wobei
die Kupplung des Parksperrenaktuators (8) und/oder die Kupplung des Durchführungselements (21) einen Rastkragen (22) aufweist oder aufweisen.

4. Getriebeeinrichtung nach einem der vorhergehenden Ansprüche, wobei das Durchführungselement (16) außerhalb des Getriebegehäuses (9 eine Membran (30) aufweist.

5. Getriebeeinrichtung nach einem der vorhergehenden Ansprüche, wobei das Durchführungselement (16) an seinem freien Ende außerhalb des Getriebegehäuses (9) eine gasdurchlässige Schutzkappe (31) aufweist.

6. Getriebeeinrichtung nach einem der vorhergehenden Ansprüche, wobei das Durchführungselement (16) wenigstens ein Dichtmittel (31) aufweist, welches das Durchführungselement (16) gegenüber der Getriebegehäuseöffnung (15) abdichtet.

7. Getriebeeinrichtung nach Anspruch 6, wobei
das wenigstens eine Dichtmittel (31) einen oder mehrere Dichtringe (32) umfasst.

8. Getriebeeinrichtung nach einem der vorhergehenden Ansprüche, wobei das Durchführungselement (16)
- mittels eines Presssitzes in der Getriebegehäuseöffnung (15) befestigt ist oder
- in die Getriebegehäuseöffnung (15) eingeschraubt ist oder
- durch eine gemeinsame Getriebegehäuseöffnung mit einem Steckverbinder (12) durchgeführt ist.

9. Antriebseinrichtung (35) für ein elektrisch antreibbares Fahrzeug (34), umfassend
- eine elektrische Maschine (36),
- eine Getriebeeinrichtung (1) nach einem der vorhergehenden Ansprüche und
- eine eine Drehbewegung der elektrischen Maschine (35) auf die Getriebeeinrichtung (1) übertragende Welle (4).

10. Antriebseinrichtung nach Anspruch 9, wobei
das Getriebegehäuse (9) Teil eines die elektrische Maschine (36), die Getriebeeinrichtung (1) und die Welle (4) einhausenden Gehäuses (37) ist.

11. Fahrzeug (34), umfassend eine Antriebseinrichtung (1) nach Anspruch 9 oder 10, die zum Antreiben des Fahrzeugs (34) eingerichtet ist.

## Claims

1. Transmission device (1) for an electrically driveable vehicle (34), comprising
- a transmission element (2),
- a parking lock (6), by means of which the transmission element (2) can be blocked and which has a parking lock actuator (8), and
- a transmission housing (9), which encloses the transmission element (2) and the parking lock (6),
**characterized by**
- a pressure equalization apparatus (14), by means of which an interior of the parking lock actuator (8) is connected to an exterior of the transmission housing (9) in a gas-permeable manner, wherein the pressure equalization apparatus (14) has a lead-through element (16) which passes through a transmission housing opening (15), and a fluid guiding element (17), the first end of which is connected to the interior of the parking lock actuator (8) and the second end of which is connected to the lead-through element (16),
wherein the pressure equalization apparatus (14)
- at the first end of the fluid guiding element (17) has a coupling (18) which is connected in a latching manner to a diametrically opposed coupling of the parking lock actuator, which coupling is preferably formed on a parking lock actuator housing (19), and/or
- at the second end of the fluid guiding element (17) has a coupling (20) which is connected in a latching manner to a diametrically opposed coupling (21) of the lead-through element (16).

2. Transmission device according to Claim 1, wherein the coupling (18) at the first end of the fluid guiding element (17) is designed as a cup coupling and/or the coupling (20) at the second end of the fluid guiding element (17) is designed as a cup coupling.

3. Transmission device according to Claim 1 or 2, wherein
the coupling of the parking lock actuator (8) and/or the coupling of the lead-through element (21) has or have a latching collar (22).

4. Transmission device according to one of the preceding claims, wherein
the lead-through element (16) has a membrane (30) outside the transmission housing (9).

5. Transmission device according to one of the preceding claims, wherein
the lead-through element (16) has a gas-permeable protective cap (31) at its free end outside the transmission housing (9).

6. Transmission device according to one of the preceding claims, wherein
the lead-through element (16) has at least one sealing means (31) which seals the lead-through element (16) in relation to the transmission housing opening (15).

7. Transmission device according to Claim 6, wherein the at least one sealing means (31) comprises one or more sealing rings (32).

8. Transmission device according to one of the preceding claims, wherein
the lead-through element (16)
- is fastened by means of a press fit in the transmission housing opening (15) or
- is screwed into the transmission housing opening (15) or
- is passed through a common transmission housing opening with a plug connector (12).

9. Drive device (35) for an electrically driveable vehicle (34), comprising
- an electric machine (36),
- a transmission device (1) according to one of the preceding claims, and
- a shaft (4) transmitting a rotational motion of the electric machine (35) to the transmission device (1).

10. Drive device according to Claim 9, wherein
the transmission housing (9) is part of a housing (37) enclosing the electric machine (36), the transmission device (1), and the shaft (4).

11. Vehicle (34), comprising a drive device (1) according to Claim 9 or 10, which is configured for driving the vehicle (34).

## Revendications

1. Dispositif de transmission (1) pour un véhicule (34) à propulsion électrique, comprenant
- un élément de transmission (2),
- un frein de stationnement (6) qui permet de bloquer l'élément de transmission (2) et qui présente un actionneur de frein de stationnement (8), et
- un boîtier de transmission (9) qui renferme l'élément de transmission (2) et le frein de stationnement (6),
**caractérisé par**
- un dispositif (14) de compensation de pression, par lequel l'intérieur de l'actionneur (8) de frein de stationnement est relié de manière perméable aux gaz à l'extérieur du boîtier de transmission (9), le dispositif (14) de compensation de pression comprenant un élément de traversée (16), qui traverse une ouverture (15) du boîtier de transmission, et un élément (17) de guidage de fluide dont la première extrémité est reliée à l'intérieur de l'actionneur (8) de frein de stationnement et dont la deuxième extrémité est reliée à l'élément de traversée (16),
le dispositif (14) de compensation de pression
- présentant un raccord (18) à la première extrémité de l'élément (17) de guidage de fluide, lequel est relié par enclenchement à un raccordement associé de l'actionneur de frein de stationnement, qui est de préférence formé sur un boîtier (19) d'actionneur de frein de stationnement, et/ou
- présentant à la deuxième extrémité de l'élément (17) de guidage de fluide un raccord (20) qui est relié par encliquetage à un raccord associé (21) de l'élément de traversée (16).

2. Dispositif de transmission selon la revendication 1, dans lequel
le raccord (18) à la première extrémité de l'élément (17) de guidage de fluide est conçu sous la forme d'un raccord à cloche et/ou le raccord (20) à la deuxième extrémité de l'élément (17) de guidage de fluide est conçu sous la forme d'un raccord à cloche.

3. Dispositif de transmission selon la revendication 1 ou la revendication 2, dans lequel
le raccord de l'actionneur (8) de frein de stationnement et/ou le raccord de l'élément de traversée (21) présente(nt) un collier d'enclenchement (22).

4. Dispositif de transmission selon l'une des revendications précédentes, dans lequel
l'élément de traversée (16) présente une membrane (30) à l'extérieur du boîtier de transmission (9).

5. Dispositif de transmission selon l'une des revendications précédentes, dans lequel
l'élément de traversée (16) présente à son extrémité libre, à l'extérieur du boîtier de transmission (9), un capuchon de protection perméable aux gaz (31).

6. Dispositif de transmission selon l'une des revendications précédentes, dans lequel
l'élément de traversée (16) présente au moins un moyen d'étanchéité (31) qui assure l'étanchéité de l'élément de traversée (16) par rapport à l'ouverture (15) du boîtier de transmission.

7. Dispositif de transmission selon la revendication 6, dans lequel
ledit au moins un moyen d'étanchéité (31) comprend une ou plusieurs bagues d'étanchéité (32).

8. Dispositif de transmission selon l'une des revendications précédentes, dans lequel
l'élément de traversée (16)
- est fixé dans l'ouverture du boîtier de transmission (15) au moyen d'un ajustement serré, ou
- est vissé dans l'ouverture du boîtier de transmission (15), ou
- traverse une ouverture commune du boîtier de transmission avec un connecteur (12).

9. Dispositif de transmission (35) pour un véhicule (34) à propulsion électrique, comprenant
- une machine électrique (36),
- un dispositif de transmission (1) selon l'une quelconque des revendications précédentes, et
- un arbre (4) transmettant un mouvement de rotation de la machine électrique (35) au dispositif de transmission (1).

10. Dispositif de transmission selon la revendication 9, dans lequel
le boîtier de transmission (9) fait partie d'un boîtier (37) qui renferme la machine électrique (36), le dispositif de transmission (1) et l'arbre (4).

11. Véhicule (34) comprenant un dispositif de transmission (1) selon la revendication 9 ou la revendication 10, qui est conçu pour entraîner le véhicule (34).
